# EUROPEAN PATENT APPLICATION

(11) **EP 2 930 048 A1**
(43) Date of publication of application: **14.10.2015**
(21) Application number: 14164207.4
(22) Date of filing: 10.04.2014
(51) Int. Cl.: B60K 35/00, B60K 37/02, G02B 27/01

(54) **Head up display projecting visual information onto a screen**

(71) Applicant: Johnson Controls Automotive Electronics SAS, 95892 Cergy-Pontoise Cedex (FR)
(72) Inventor: Henon, Fabrice, 95800 Cergy (FR); Lambert, Yves, 95520 Osny (FR); Louvieaux, Nicolas, 60240 Parnes (FR); Hasan, Shenol, 1700 Sofia (BG); Andreev, Dimitar, 1013 Sofia (BG)
(74) Representative: Loock, Jan Pieter

(57) **Abstract**

The present invention suggests a head up display projecting visual information onto a screen, wherein the head up comprises a projector unit for generating the visual information and a mirror for forwarding the generated visual information to the screen, wherein the projector unit and the mirror are at least partially embedded in and/or fixed to a non-transparent panel.

## Description

The present invention relates to a head up display for projecting visual information onto a screen.

Such head up displays are typically integrated into a vehicle dashboard and are intended to supply a passenger of the vehicle with information such as the current vehicle speed, the fuel gauge and or warnings, for example. Typically, the visual information is projected onto a mirror or a combiner that is reversibly transformable between a usage position and a non-usage position.

Typically, a projector unit is arranged inside a housing of the head up display and the screen protrudes from a cover of the housing. In order to forward a projection light emitted by the projector unit, a mirror is provided that reflects the projection light from the projector unit to the screen. The quality of the projected visual information on the screen therefore depends on the relative orientation of the projector unit and the mirror. Being integrated into a dashboard of a vehicle, potential shocks may occur that disadvantageously lead to a misalignment of the projector unit and the mirror respectively. In such a scenario, a projection quality is reduced.

Furthermore, an arrangement of the projector unit inside the housing, in particular below the screen (being in the usage position), requires an opening for passing the projection light through. As a result, a passenger can see inside the housing of the head up display and, for example, see mechanical components or printed circuit boards. This has the unwelcome effect that the overall look of the head up display is debased.

### Summary

It is the objective of the present invention to provide a head up display that projects visual information onto a screen, wherein a projection quality is improved with respect to the state of the art and can be preserved for a long time.

The object of the present invention is solved by a head up display projecting visual information onto a screen, wherein the head up display comprises a projector unit for generating the visual information and a mirror for forwarding the generated visual information to the screen, wherein the projector unit and/or the mirror are permanently connected to a non-transparent panel for a fixed relative orientation between the projector unit and the mirror.

In contrast to the state of the art, it is herewith advantageously possible to permanently maintain the relative orientation of the projector unit and the mirror by the panel. Moreover, the panel helps aligning the projector unit and the mirror relative to each other. As a consequence, the projection quality is improved compared to those head up displays using no panel. Furthermore, the non-transparent panel prevents a passenger from seeing inside the housing. It is also possible that the panel covers subjects inside the housing that can scatter or reflect light. Such reflected or scattered light could interfere or overlap with a projection light emitted by the projector unit. As a consequence, covering those subjects would suppress the influence of the scattered and reflected light and therefore improve the quality of the projected visual information.

Preferably, the panel has at least partially a matt surface in order to reduce scattering light that originates from the panel. Furthermore, it is provided that the mirror and the projector unit are arranged substantially at the same level of the panel. In particular, it is provided that the projector unit and/or the mirror are embedded in and/or fixed to a non-transparent panel. It is thinkable that the panel is fixed to the mirror or the projector unit non-positively, frictionally and/or cohesively.

According to another embodiment of the present invention, it is provided that the panel is formed integrally and/or embedded in a housing that houses the projector unit. The integrally formed panel realizes a stable connection between the mirror and the projector unit. Furthermore, it is advantageously possible to embed the panel such inside the housing that the panel is substantially protected against shocks. For example, it is thinkable that the panel is connected to the housing by a damping element that absorbs shocks and leads the panel back to its original position immediately after the shocks. Due to maintaining the relative position of the mirror and the projector unit, the projection quality can be preserved advantageously.

According to another embodiment of the present invention, it is provided that the panel has recesses for passing light through. Preferably, the recesses are arranged immediately next to the mirror or the projector unit. It is also thinkable that the mirror or the projector unit protrudes into the recess in order to realize a non-positive locking that reinforces the connection. It is also thinkable that the recesses are at least partially filled with a pane, plate or sheet for the protection of the mirror or the projecting unit. Preferably, the pane, plate or sheet is at least partially a filter that filters unwanted parts out of the projection light.

According to another embodiment of the present invention, it is provided that the panel covers a printed circuit board. As a consequence, the passenger cannot see the printed circuit board. Moreover, it is provided that the panel is a dirt protection that prevents dirt or dust from affecting the printed circuit board.

According to another embodiment of the present invention, it is provided that the screen is reversibly transferable between a usage and a non-usage position, wherein the screen in the non-usage position is mainly arranged inside the housing that frames the projector unit. This has the positive effect that the screen can be removed from the field of view of the passenger, whenever the head up display is not used. In particular, it is provided that the screen is fully embedded inside the housing for protecting the screen advantageously, whenever the head up display is not used.

According to another embodiment of the present invention, it is provided that the panel is mainly box-shaped and/or has an opening. It is provided that the projection light leaves the panel through the opening in a usage configuration of the head up display. Preferably, the opening is arranged on the top of the box-shaped panel. In particular, it is provided that the box-shaped panel is designed such that it matches to a space that is determined by the mirror, the projector unit and the part of the housing being located between the mirror and the projector unit. Preferably, at least one wall is tilted with respect to a floor area of the panel.

According to another embodiment of the present invention, it is provided that the housing houses a kinematical device for reversibly moving the screen between the usage position and the non-usage position. It is provided that the kinematical device pivots and/or shifts the screen for transferring. It is herewith thinkable that the screen is transferred manually or automatically. Furthermore, it is provided that the kinematical device comprises a gearing mechanism.

According to another embodiment of the present invention, it is provided that the head up display comprises a first flap that mainly covers the panel in the non-usage position and a second flap that mainly covers the screen being arranged inside the housing. Furthermore, the head up display preferably comprises a third flap giving access to the kinematical device or the screen in the non-usage position. In particular, it is provided that the first flap is open in a usage configuration of the head up display. In such a configuration, the screen is in the usage position and the head up display is preferably in use. Furthermore, it is provided that the second flap is opened, whenever the screen is transferred and the third flap is opened, whenever the kinematic device or the screen has to be repaired, for instance. Preferably, the first flap, the second flap and the third flap are designed such that they form a substantially flat top surface of the head up display in a non-usage configuration of the head up display. In such a configuration, the head up display is not in use and the head up display does not affect the overall look of a dashboard that comprises the head up display.

According to another embodiment of the present invention, it is provided that the projector unit comprises a light source and a light modulation device. It is herewith advantageously possible to generate visual information by using the light modulation device. For projecting the generated visual information, the projector unit uses the light of the light source as back-light. Preferably, it is provided that the modulation device comprises a lens and a liquid crystal display, in particular a TFT (thin film transistor)-display. Furthermore, it is provided that the liquid crystal display, in particular the TFT-display, is arranged directly adjacent to a recess of the panel. Moreover, it is preferably provided that the recess' size is adapted to the size of the TFT-display. Furthermore, the projector unit is framed by a cavity that prevents light of the light source from leaving the projector unit without passing the TFT-display.

According to another embodiment of the present invention, it is provided that the walls of the panel are tilted with respect to a direction being substantially perpendicular to the main propagation direction of the projection light or the light emitted by the projector unit. As a consequence
-- the wall of the panel and a tilted mirror or
-- the wall of the panel and a tilted TFT-display
are arranged in a common plane.

According to another embodiment of the present invention, it is provided that the screen is a combiner and/or a mirror. In the case of a combiner, the screen being in the usage position does not limit the field of view. In the case of a mirror, the screen being in the usage position reflects a big amount of the visual information to the passenger.

According to another embodiment of the present invention, it is provided that the housing forms at least partially a part of a dashboard.

Another subject of the present invention is a vehicle having a head up display as described above.

Another subject of the present invention is a method for aligning a mirror and a projector unit of a head up display as described above, wherein the panel is used for positioning and/or orientating the mirror and/or the projector unit, in particular its TFT-display. Using such a method constructs a head up display having a mirror and a projector unit being preferably accurately orientated to each other. As a consequence, the quality of the projected visual information on the screen is increased advantageously.

### Brief description of the drawings

**Figure 1** shows a head up display according to a first exemplary embodiment of the present invention being in a usage configuration in a perspective view.
**Figure 2** shows the head up display according to the first exemplary embodiment of the present invention being in a non-usage configuration in a perspective view.
**Figure 3** shows the head up display according to the first exemplary embodiment of the present invention being in the usage configuration without a cover of a housing.
**Figure 4** shows a sectional view of a head up display according to the first exemplary embodiment of the present invention.

### Detailed description

The present invention will be descripted with respect to particular embodiments and with the reference to certain drawings but the invention is not limited thereto but only by the claims. The drawings described are only schematic and non-limiting. In the drawings, the size of some elements may be exaggerated and not drawn on scale for illustrative purposes.

Where an indefinite or definite article is used when referring to a singular noun, e.g. "a", "an", "the", this includes a plural of the noun unless something else is specifically stated.

Furthermore, the terms first, second, third and the like in the description and in the claims are used to distinguish between similar elements and not necessarily for describing a sequential or chronological order. It is to be understood that the terms so used are interchangeable under appropriate circumstances and that the embodiments of the invention described herein are capable of operation in other sequences than described or illustrated herein.

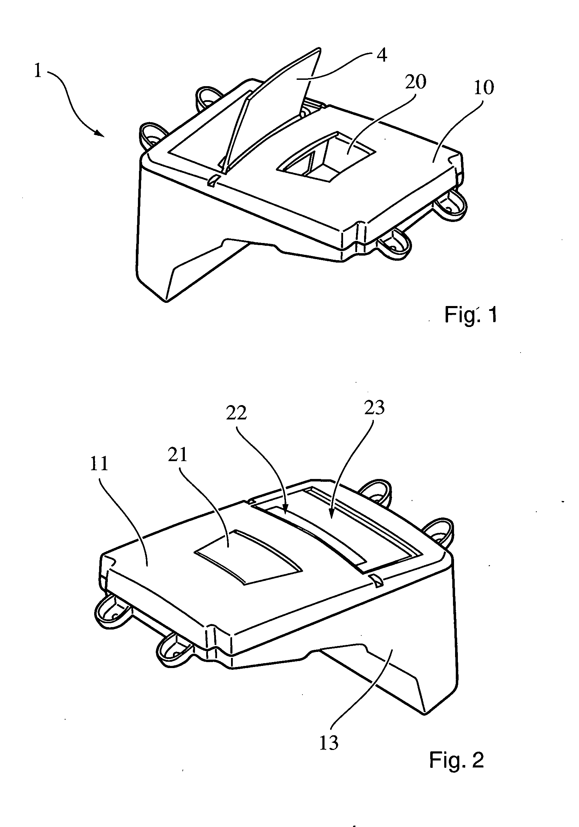

In **figure 1**, a head up display 1 according to a first exemplary embodiment of the present invention being in a usage configuration is illustrated in a perspective view. Such a head up display 1 is preferably integrated into a vehicle dashboard and comprises a screen 4 for displaying visual information. In particular, the head up display 1 is arranged such that a passenger of the vehicle, in particular its driver, can take notice of the visual information without changing the head position and/or viewing direction. The visual informations are preferably related to a current vehicle speed, a fuel gauge and/or other parameters specifying the state of the vehicle and are displayed on the screen. It is also thinkable that warnings are displayed on the screen, too. Consequently, the head up display 1 is used as a kind of prompter that supplies the passenger straightforward with information.

It is provided that the visual information is projected onto a screen 4. A mirror, a combiner or a windscreen may be used as a screen for instance. In particular, it is provided that the screen 4 is reversibly transferable between a usage position and a non-usage position. It is herewith provided that the screen 4 being in the usage position protrudes from a cover 11 that forms an upper part of a housing 10 of the head up display 1. Preferably, the screen 4 being in the usage position is arranged within the viewing direction of the passenger and/or the screen 4 being in the non-usage position forms a part of the vehicle dashboard. In particular, it is provided that the head up display 1 being in the usage configuration has a screen 4 being in the usage position as illustrated in figure 1. Next to the cover 11, the housing preferably comprises a body 13. Inside the housing formed substantially by the cover 11 and the body 13, a projector unit 9 is arranged that generates the visual information. Preferably, the projector unit 9 is located substantially below the projector unit 9 being in the usage position. In order to forward the visual information from the projector unit 9 to the screen 4 (protruding from the cover 11 in the usage position), it is provided that a mirror 12 is arranged inside the housing 10, wherein the mirror 12 reflects the visual information onto the screen 4. The reflected light leaves the housing 10 through a closable opening 20 that is opened for the usage configuration. The relative arrangement of the projector unit 9 and the mirror 12 determinates how the visual information is projected onto the screen 4. Consequently, a relative misalignment of the projector unit 9 and the mirror 12 may disadvantageously lead to a distorted projection. In order to circumvent this misalignment, it is provided that the projector unit 9 and the mirror 12 are fixed to an integrally formed panel 30 that is preferably embedded into the housing 10. Additionally, the panel 30 has the advantage of covering components of the head up display 1, such as printed circuit boards 25 or other equipment that would be visible otherwise in the usage configuration.

In **figure 2**, a head up display 1 being in the non-usage configuration according to the first exemplary embodiment of the present invention being in the non-usage configuration is illustrated in a perspective view. It is herewith provided that the cover 11 of the head up display 1 forms a substantially flat surface on the upper side of the head up display 1. In the non-usage configuration, the head up display 1 does mainly not affect the visual impression of a dashboard, in which the head up display 1 is integrated. In particular, it is provided that the opening 20 is covered by a first flap 21 in the non-usage configuration, wherein the first flap 21 is non-transparent and substantially arranged above the panel 30, preferably. Furthermore, it is provided that the cover 11 is closed by a second flap 22 that covers the screen 4 being in the non-usage position. Preferably, the second flap 22 is non-transparent. Additionally, a third flap 23 is preferably arranged above a kinematical device 7 that pivots and/or shifts the screen 4 for its reversible transfer between the usage position and the non-usage position. The third flap 23 is provided for getting access to the housing 10 for repairs or other services. In particular, the third flap 23 can be opened in both the usage and the non-usage configuration. Furthermore, it is provided that the first flap 21, the second flap 22 and/or the third flap 23 are openable or closable by pivoting and/or shifting them. In particular, the movement of the first flap 21, the second flap 22 and/or the third flap 23 for opening or closing is performed manually and/or automatically.

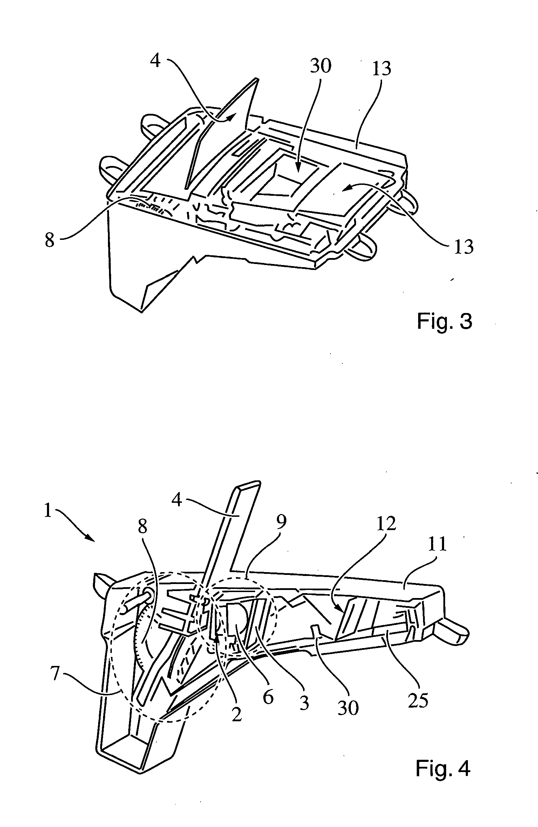

In **figure 3**, a head up display 1 according to the first exemplary embodiment of the present invention being in the usage configuration is illustrated without the cover 11 of the housing 10. Consequently, the illustration makes it possible to take a look inside the housing 10. The kinematical device 7 mainly located below the third flap 23 has a gearing mechanism 8. This gearing mechanism 8 supports the kinematical device 7 by reversibly transferring the screen 4 between the usage position and the non-usage position. Next to the third flap 23, the second flap 22 is closed in the usage configuration of the head up display 1, whereas the first flap 21 is shifted for giving access to the box-shaped panel 30 that is embedded into the housing 10. Preferably, it is provided that the panel 30 has recesses that allow light passing through it. In particular, it is provided that the projection light of the projector unit 9 passes though the recesses and leaves the panel 30 through the opening 20. It is herewith thinkable that the respective recess and/or the opening include a transparent or semi-transparent filling such as a pane or sheet for filtering the projection light or protecting the mirror 12 or the projector unit 9.

In **figure 4**, a sectional view of a head up display 1 according to the first exemplary embodiment of the present invention is illustrated. In such an illustration, the projector unit 9 that is included inside the housing 10 is visible. It is provided that the projector unit 9 comprises a light source 2, a lens 6 and a liquid crystal display 3. Preferably, the light source 2 is a LED being integrated into a printed circuit board and/or the liquid crystal display 3 is a TFT (thin film transistor)-display. In particular, the TFT-display is arranged immediately next to the recess of the panel 30 and is fixed to it. It is also thinkable that the TFT-display at least partially protrudes inside the recess and is therefore embedded in the recess. Furthermore, it is provided that the TFT-display is tilted with respect to a direction being mainly perpendicular to the projection light direction and a wall of the panel 30 is tilted correspondingly. Opposite to the recess for the projector unit 9, the recess for the mirror 12 is arranged. Preferably, the mirror 12 is tilted such as the TFT-display is tilted and the wall of the panel 30 in the region of the recess for the mirror 12 is tilted correspondingly. Furthermore, it is provided that the panel 30 is non-transparent. It is herewith advantageously possible to cover equipment or components such as a printed circuit board 25 or mechanics that are arranged inside the housing 10 below or next to the panel. Furthermore, it is provided that the housing 10 has storage space for the screen 4 that is embedded in the housing 10 in the non-usage position.

### Reference signs

- 1: head up display
- 2: light source
- 3: liquid crystal display
- 4: screen
- 6: lens
- 7: kinematical device
- 8: gearing mechanism
- 9: projector unit
- 10: housing
- 11: cover of the housing
- 12: mirror
- 13: body of the housing
- 20: opening
- 21: first flap
- 22: second flap
- 23: third flap
- 25: printed circuit board
- 30: panel

## Claims

1. Head up display (1) projecting visual information onto a screen (4), wherein the head up display (1) comprises a projector unit (9) for generating the visual information and a mirror (12) for forwarding the generated visual information to the screen (4), wherein the projector unit (9) and/or the mirror (12) are permanently connected to a non-transparent panel (30) for a fixed relative orientation between the projector unit and the mirror.

2. Head up display (1) according to claim 1, wherein the panel (30) is formed integrally and/or embedded in a housing (10) that houses the projector unit (9).

3. Head up display (1) according to one of the preceding claims, wherein the panel (30) has recesses for passing light through.

4. Head up display (1) according to one of the preceding claims, wherein the panel (30) covers at least partially a printed circuit board (25).

5. Head up display (1) according to one of the preceding claims, wherein the screen (4) is reversibly transferable between a usage and a non-usage position, wherein the screen (4) in the non-usage position is mainly arranged inside the housing (10) that houses the projector unit (9).

6. Head up display (1) according to one of the preceding claims, wherein the panel (30) is box-shaped and/or has an opening (20).

7. Head up display (1) according to one of the preceding claims, wherein the housing (10) houses a kinematic device (7) for reversibly moving the screen (3) between the usage-position and the non-usage position.

8. Head up display (1) according to one of the preceding claims, wherein head up display (1) comprises a first flap (21) that mainly covers the panel in the non-usage position and/or a second flap (22) that mainly covers the screen (4) being arranged inside the housing (10).

9. Head up display (1) according to one of the preceding claims, wherein the projector unit (9) comprises a light source (2) and a light modulation device.

10. Head up display (1) according to claim 8, wherein the modulation device comprises a lens (6) and a liquid crystal display (3), wherein the liquid crystal display (3) is arranged directly adjacent to the panel (30).

11. Head up display (1) according to one of the preceding claims, wherein the walls of the panel (30) are tilted with respect to a direction being substantially perpendicular to the propagation direction of light emitted by the projector unit (9).

12. Head up display (1) according to one of the preceding claims, wherein the screen (4) is a combiner and/or a mirror.

13. Head up display (1) according to one of the preceding claims, wherein the housing (10) forms at least partially a part of a dashboard.

14. Vehicle having a head up display (1) according to any one of the preceding claims.

15. Method for aligning a mirror (12) and a projector unit (9) of a head up display (1) according to one of the claims 1 to 13, wherein the panel (30) is used for positioning and/or orientating the mirror (12) and/or the projector unit (9).
